# EUROPÄISCHE PATENTSCHRIFT

(11) **EP 2 689 945 B1**
(45) Veröffentlichungstag und Bekanntmachung des Hinweises auf die Patenterteilung: **31.05.2017**
(21) Anmeldenummer: 12290255.4
(22) Anmeldetag: 24.07.2012
(51) Int. Cl.: B60H 1/22, F24H 1/12, H05B 1/02, F24H 9/14, F24H 9/18

(54) **Heizvorrichtung**
Heating device
Dispositif de chauffage

(43) Veröffentlichungstag der Anmeldung: 29.01.2014
(73) Patentinhaber: MAHLE Behr GmbH & Co. KG, 70469 Stuttgart (DE); Mahle Behr France Rouffach S.A.S., 68250 Rouffach (FR); Behr-Hella Thermocontrol GmbH, 59557 Lippstadt (DE)
(72) Erfinder: Kohl, Michael, 74321 Bietigheim-Bissingen (DE); Krumbach, Karl-Gerd, 71576 Burgstetten (DE); Lochmahr, Karl, 71665 Vaihingen/Enz (DE); Seewald, Wolfgang, 71732 Tamm (DE); Schunck, Olivier, 67220 Thanville (FR); Nagel, Dirk, 33102 Paderborn (DE); Heeper, Lars, 33102 Paderborn (DE); Stallein, Matthias, 33397 Rietberg (DE); Steinkamp, Michael, 59558 Lippstadt (DE); Marquas, Karsten, 59757 Arnsberg (Vosswinkel) (DE); Dicke, Volker, 59909 Bestwig-Heringhausen (DE)
(74) Vertreter: Grauel, Andreas

(56) Entgegenhaltungen:
- WO-A1-2011/052874
- WO-A1-2012/101273
- US-A- 5 727 118

## Beschreibung

### Technisches Gebiet

Die Erfindung betrifft eine Heizvorrichtung, insbesondere für Kraftfahrzeuge, gemäß dem Oberbegriff von Anspruch 1.

### Stand der Technik

Heizvorrichtungen, insbesondere Heizvorrichtungen mit elektrischen Heizelementen, sind im Stand der Technik bekannt. Dabei sind auch Heizvorrichtungen bekannt geworden, die bei Hochvoltapplikationen bis ca. 400 V einsetzbar sind. Bei solchen Heizvorrichtungen ist darauf zu achten, dass im Leckagefall kein zu erwärmendes Fluid in Kontakt kommt mit den spannungsführenden Teilen der elektrischen Heizelemente, so dass es nicht zu einer Gefährdung der Benutzer dieser Heizvorrichtungen kommt.

Die WO 2011/085915A1 offenbart eine elektrische Heizvorrichtung, die für eine Luftdurchströmung geeignet ist und elektrische Heizbahnen und mit Wellrippen versehenen Kanäle aufweist, wobei ein keramisches Abdeckelement vorgesehen ist, dass auf einer Passivierungsschicht angeordnet ist und gegen Eindringen von Gasen oder Fluiden dicht mit einer Passivierungsschicht verbunden ist.

Diese Einrichtung ist jedoch für flüssige Medien weniger gut geeignet, so dass insbesondere auch im Hinblick auf die elektrische Isolierung anderweitige Konzepte benötigt werden.

Die nachveröffentlichte WO 2012/101273 A1 zeigt eine Heizvorrichtung gemäß Oberbegriff des Anspruchs 1.

### Darstellung der Erfindung, Aufgabe, Lösung, Vorteile

Es ist die Aufgabe der Erfindung, eine Heizvorrichtung zu schaffen, die gegenüber dem Stand der Technik verbessert ist und dabei eine Trennung zwischen dem Fluidkanal und dem elektrischen Heizelement verbessert realisiert ist.

Dies wird mit den Merkmalen von Anspruch 1 erreicht.

Ein Ausführungsbeispiel sieht eine Heizvorrichtung vor, mit aufeinander gestapelten Scheiben, wobei zumindest ein erster Fluidkanal zwischen einem ersten Scheibenpaket mit einer ersten und einer zweiten Scheibe fluiddicht ausgebildet ist und wobei ein elektrisches Heizelement zwischen einer ersten Scheibe des ersten Scheibenpakets und einer weiteren Scheibe angeordnet ist, wobei das elektrische Heizelement zwischen den beiden Scheiben abgedichtet aufgenommen und elektrisch isoliert ist, wobei ein einlassseitiger und ein auslassseitiger Fluidanschluss des ersten Fluidkanals an der zweiten Scheibe des ersten Scheibenpakets angeordnet ist, wobei das elektrische Heizelement eine Anschlusseinrichtung zur elektrischen Kontaktierung aufweist, welche mit dem elektrischen Heizelement verbunden ist und durch ein Fenster in der zweiten Scheibe des ersten Scheibenpakets ragt, wobei die Fluidanschlüsse und das Fenster benachbart zu gegenüberliegenden Seitenkanten der zweiten Scheibe angeordnet sind.

Dabei ist es vorteilhaft, wenn zumindest ein zweiter Fluidkanal zwischen einem zweiten Scheibenpaket mit einer ersten und einer zweiten Scheibe fluiddicht ausgebildet ist. Dadurch kann ein erster und ein zweiter Fluidkanal durchströmt werden, die bevorzugt beiderseits des elektrischen Heizelements angeordnet sind, um die Wärme günstig aus dem elektrischen Heizelement auskoppeln zu können.

Auch ist es zweckmäßig, wenn das elektrische Heizelement zwischen der ersten Scheibe des ersten Scheibenpakets und der ersten Scheibe des zweiten Scheibenpakets abgedichtet aufgenommen und elektrisch isoliert ist. Dadurch kann eine günstige Bauraumsituation geschaffen werden. Das erste und das zweite Scheibenpaket können dabei derart vormontiert sein, so dass sie beispielsweise zuvor als vormontierte Einheit gelötet sind, um dann mit dem elektrischen Heizelement und einer Steuereinheit bestückt werden zu können. Dies hat auch den Vorteil, dass der Raum zwischen den beiden Scheiben, in welchem das elektrische Heizelement angeordnet ist, nicht mit einem Fluid durchströmt wird, welches in den Fluidkanälen strömt und welches von dem elektrischen Heizelement erwärmt werden soll.

Auch ist es vorteilhaft, wenn ein einlassseitiger und ein auslassseitiger Fluidanschluss des zweiten Fluidkanals an der zweiten Scheibe des zweiten Scheibenpakets angeordnet ist. Dadurch kann eine parallele oder serielle Durchströmung der beiden Fluidkanäle vorgesehen sein.

Dabei ist es vorteilhaft, wenn der erste und/oder der zweite Fluidkanal zweiflutig oder mehrflutig ausgebildet ist. Dies erfolgt vorteilhaft unter Zwischenanordnung zumindest einer dritten Scheibe oder mehrerer Scheiben zwischen der ersten Scheibe und der zweiten Scheibe. Dadurch kann eine höhere Kapazität für die Durchströmung eines Fluids erzielt werden, wenn das Fluid durch zwei oder mehr als zwei Fluten parallel oder seriell strömen kann. Auch kann es zweckmäßig sein, wenn in einem Fluidkanal oder in einer Flut eines Fluidkanals turbulenzerhöhende Einlagen, so genannte Turbulenzeinlagen, vorgesehen sind. Alternativ können statt der Turbulenzeinlagen auch Einprägungen in die Scheiben vorgenommen werden, welche turbulenzsteigernd wirken.

Auch ist es vorteilhaft, wenn die zweite Scheibe des ersten und/oder des zweiten Fluidkanals mit einer Verstärkungsscheibe belegt ist. Dadurch kann der äußere Abschluss des Scheibenpakets verstärkt werden, was der Dauerfestigkeit dient und auch zur Montage der Heizvorrichtung dient.

Zweckmäßig ist es, wenn der auslassseitige Fluidanschluss des ersten Fluidkanals mit dem einlassseitigen Fluidanschluss des zweiten Fluidkanals fluidverbunden ist. Dadurch wird erreicht, dass die beiden Fluidkanäle seriell durchströmt werden, so dass das Fluid die Vorrichtung zweifach durchströmt und dadurch besser aufgeheizt werden kann.

Auch ist es zweckmäßig, wenn das elektrische Heizelement als elektrisches Widerstandselement auf einem Träger aufgenommen ist. Dadurch kann ein dünnes elektrisches. Widerstandsschichtelement auf einen Träger aufgebracht werden, welcher beispielsweise ein keramischer Träger ist.

Dabei ist es vorteilhaft, wenn das elektrische Widerstandselement durch eine Deckschicht abgedeckt und elektrisch isoliert ist. Dabei kann die Deckschicht aus dem gleichen Material gefertigt sein, wie der Träger. Vorteilhaft kann eine Keramik verwendet werden, die elektrisch isoliert und dennoch gute thermische Eigenschaften hat.

Auch ist es vorteilhaft, wenn auf dem Träger weiterhin zumindest ein elektronisches Bauelement, wie ein Leistungselektronikbauelement, angeordnet ist.

Besonders vorteilhaft ist es, wenn eine Steuereinheit vorgesehen ist, die auf dem ersten Scheibenpaket oder auf der auf dem ersten Scheibenpaket aufgelegten Verstärkungsscheibe angeordnet ist und die mit der Anschlusseinrichtung des elektrischen Heizelements elektrisch verbunden ist. Dadurch kann die Steuereinheit durch den Durchfluss des Fluids durch den ersten Fluidkanal gekühlt werden und die Steuereinheit gibt ihre Abwärme an den zu erwärmenden Fluidstrom ab, was die Effizienz der Heizvorrichtung weiter erhöht.

Auch ist es zweckmäßig, wenn zwischen einer Scheibe und dem elektrischen Heizelement ein elektrisches Isolationselement angeordnet ist. Dadurch kann das elektrische Heizelement isoliert werden, damit es auch für Hochvoltanwendungen mit U > 60 V geeignet ist.

Weiterhin ist es zweckmäßig, wenn zwischen einem Boden der Scheibe und dem elektrischen Heizelement ein flächiges Isolationselement angeordnet ist und/oder zwischen einem hoch stehenden Rand der Scheibe und dem elektrischen Heizelement ein rahmenartiges Isolationselement angeordnet ist. Dies verbessert die Isolation des elektrischen Heizelements.

Auch ist es zweckmäßig, wenn zwischen dem Boden der Scheibe und dem flächigen Isolationselement eine Ausgleichsplatte vorgesehen ist. Diese Ausgleichsplatte verbessert die thermische Anbindung des elektrischen Heizelements.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: eine Ansicht einer erfindungsgemäßen Heizvorrichtung,
- Fig. 2: eine Ansicht einer Scheibenanordnung mit Fluidkanal und Heizelement,
- Fig. 3: eine Schnittansicht einer Heizvorrichtung,
- Fig. 4: ein Detail der Figur 3,
- Fig. 5: ein Detail der Figur 3,
- Fig. 6: eine Anordnung von Scheiben in einer Explosionsdarstellung,
- Fig. 7: eine Anordnung von Scheiben in einer Explosionsdarstellung,
- Fig. 8: eine Anordnung von Elementen der Heizvorrichtung, und
- Fig. 9: eine Schnittansicht einer Heizvorrichtung.

### Bevorzugte Ausführung der Erfindung

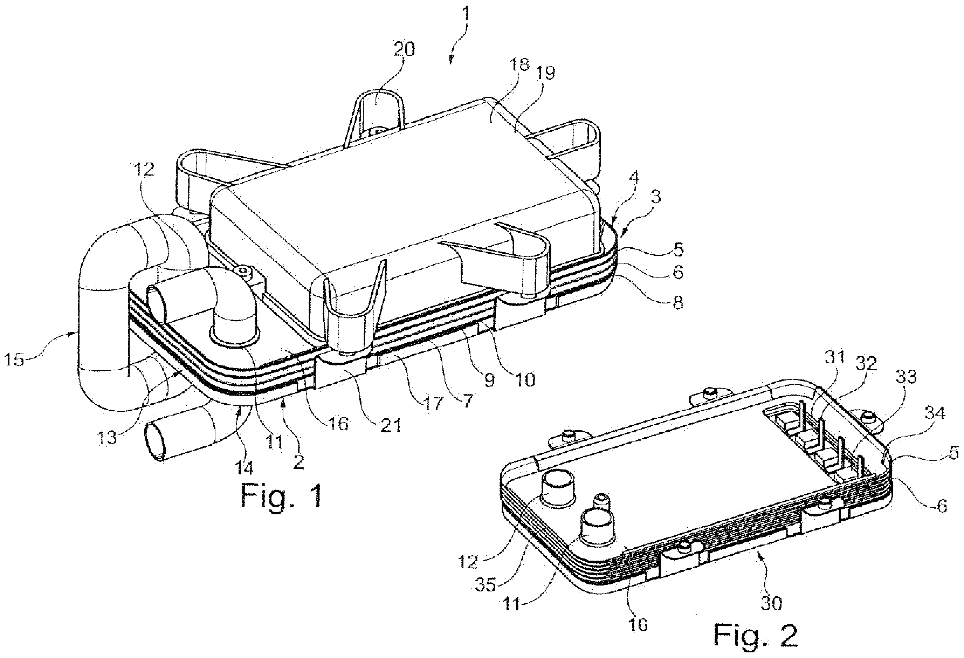

Die Figur 1 zeigt eine erfindungsgemäße Heizvorrichtung 1 mit aufeinander gestapelten Scheiben 2. Die aufeinander gestapelten Scheiben 2 umfassen zumindest einen ersten Fluidkanal 3, der zwischen einem ersten Scheibenpaket 4 mit einer ersten Scheibe 5 und einer zweiten Scheibe 6 gebildet ist, wobei der Fluidkanal 3 fluiddicht ausgebildet ist, indem die beiden Scheiben 5,6 des ersten Scheibenpakets 4 fluiddicht miteinander verbunden sind. Bevorzugt liegen die Scheiben 5, 6 am Rand aneinander an und sind dort fluiddicht verbunden, wie beispielsweise gelötet. Weiterhin weist die Heizvorrichtung 1 in diesem Ausführungsbeispiel einen zweiten Fluidkanal 7 auf, der zwischen einem zweiten Scheibenpaket 8 fluiddicht ausgebildet ist.

Das zweite Scheibenpaket 8 wird gebildet durch eine erste Scheibe 9 und eine zweite Scheibe 10. Zwischen den beiden Scheibenpaketen 4, 8 ist ein elektrisches Heizelement angeordnet, dass in der Figur 1 jedoch nicht zu erkennen ist. Dabei ist das elektrische Heizelement zwischen einer ersten Scheibe 5 des ersten Scheibenpakets 4 und einer ersten Scheibe 9 des zweiten Scheibenpakets 8 angeordnet. Dabei ist das elektrische Heizelement zwischen diesen beiden Scheiben 5, 9, nämlich der ersten Scheibe 5 des ersten Scheibenpakets 4 und der ersten Scheibe 9 des zweiten Scheibenpakets 8 abgedichtet und elektrisch isoliert aufgenommen.

Die Heizvorrichtung weist somit zwei Fluidkanäle 3, 7 auf, ein erster Fluidkanal 3, welcher oberhalb bzw. auf einer Seite des elektrischen Heizelements angeordnet ist, und ein zweiter Fluidkanal 7, der unterhalb bzw. auf der gegenüberliegenden Seite des elektrischen Heizelements angeordnet ist.

Die Scheibenpakete 4, 8, welche die Fluidkanäle 3, 7 zwischen sich ausbilden, sind mit jeweils einem einlassseitigen und auslassseitigen Fluidanschluss 11, 12, 13, 14 ausgebildet, wobei der einlassseitige Fluidanschluss 11 das Fluid in den ersten Fluidkanal 3 leitet und der auslassseitige Fluidanschluss 12 das Fluid aus dem ersten Fluidkanal 3 ausleitet. Der Fluideinlass 13 leitet wiederum ein Fluid in den zweiten Fluidkanal 7 ein und der Fluidauslass 14 leitet wiederum das Fluid aus den zweiten Fluidkanal 7 aus. Mit dem Fluideinlass 11 und dem Fluidauslass 14 sind Rohranschlussstutzen verbunden, die einen Anschluss an ein Fluidleitungssystem erlauben. Dadurch kann das durch die Heizvorrichtung 1 geleitete Fluid einem weiteren Kreislauf zugeführt werden.

Zwischen dem Fluidauslass 12 und dem Fluideinlass 13 ist eine Fluidverbindung 15 vorgesehen, die beispielsweise als Rohrleitung ausgebildet ist und dabei den Auslass des ersten Fluidkanals 3 mit dem Einlass des zweiten Fluidkanals 7 fluidverbindet. Dadurch werden die beiden Fluidkanäle seriell nacheinander durchflossen.

Weiterhin ist zu erkennen, dass auf der obersten Scheibe des Scheibenstapels eine Verstärkungsscheibe 16 angeordnet ist, wobei unterhalb der untersten Scheibe ebenfalls eine Verstärkungsscheibe 17 angeordnet ist. Bei einem anderen Ausführungsbeispiel kann nur eine Verstärkungsscheibe auf der obersten oder untersten Scheibe des Scheibenstapels oder auch keine Verstärkungsscheibe vorgesehen sein.

Die Fluidanschlüsse sind im Falle der Auflage einer Verstärkungsscheibe 16, 17 mit der Verstärkungsscheibe 16, 17 verbunden, wobei ohne Verstärkungsscheibe die Fluidanschlüsse direkt mit der obersten beziehungsweise der untersten Scheibe des Scheibenstapels verbunden ist.

Weiterhin ist zu erkennen, dass eine Steuereinheit 18 auf der obersten Scheibe beziehungsweise auf der diesbezüglich aufgelegten Verstärkungsscheibe 16 angeordnet ist. Die Steuereinheit 18 weist ein Gehäuse 19 auf, das die elektronischen Komponenten der Steuereinheit 18 aufnimmt und schützt. Dazu ist das Gehäuse beispielsweise abgedichtet ausgebildet.

Das Gehäuse 19 der Steuereinheit 18 weist seitliche Fortsätze 20 auf, die zur Befestigung der Steuereinheit 18 und zum Verspannen des Scheibenstapels dienen. Dazu ist entweder an der unteren Verstärkungsscheibe oder gesondert von dieser, aber die unterste Stapelscheibe bzw. die untere Verstärkungsscheibe umgreifend, zumindest ein, vorteilhaft jedoch zwei, Haltebügel 21 vorgesehen, der/die mit den Befestigungslaschen 20 verbindbar ist/sind. Beispielsweise sind die Befestigungslaschen mit dem Haltebügel verschraubbar, so dass der diesbezügliche Anpressdruck auf die Scheiben des Scheibenstapels eingestellt werden kann. Alternativ kann auch eine andere formschlüssige Verbindung vorgesehen sein.

Die Scheiben des Ausführungsbeispiels sind nach Art der Stapelscheiben ausgebildet, wobei eine Scheibe einen im Wesentlichen ebenen Boden und einen nach einer Seite aufgestellten umlaufenden Rand aufweist, wobei der Rand gegenüber der Ebene des Bodens um weniger als 90° hochgestellt ist, so dass er eine Schräge zur Normalen ausbildet. Werden zwei Scheiben aufeinander gestapelt, so nehmen die ebenen Böden einen Abstand zueinander an und der dadurch gebildete Kanal wird beispielsweise durch Verlötung umlaufend geschlossen.

Es ist denkbar, dass ein Scheibenpaket auch mehr als zwei Scheiben umfasst.

Die Figur 2 zeigt die Anordnung, des Scheibenstapels 30 gemäß der Figur 1, wobei die Steuereinheit 18 auf die Verstärkungsscheibe 16 aufgesetzt ist. Man erkennt im rechten Teil der Figur, dass in der Verstärkungsscheibe 16 sowie in den darunter liegenden Scheiben des ersten Fluidkanals, also in dem ersten Scheibenpaket mit ersten und zweiten Scheibe 5, 6 ein Fenster 31 ausgebildet ist, durch das Anschlusseinrichtungen 32 des elektrischen Heizelements hindurchgreifen, die der Kontaktierung des elektrischen Heizelements mit der Steuereinheit 18 dienen. Weiterhin sind in diesem Fenster 31 bevorzugt elektronische Bauelemente 33 des elektrischen Heizelements zu erkennen, die beispielsweise als leistungselektronische Bauelemente auf dem elektrischen Heizelement angeordnet sind, um eine gute thermische Ankopplung an den zu erwärmenden Fluidkanal zu erreichen. Da das Fluid, das durch den Fluidkanal strömt, eine Temperatur aufweist, die deutlich geringer ist als die Temperatur der leistungselektronischen Bauelemente 33, können diese effektiv durch den Fluidstrom des Fluidkanals gekühlt werden.

In Figur 2 ist zu erkennen, dass das Fenster 31 in dem Scheibenpaket 4 und in der Verstärkungsscheibe 16 benachbart zu einer Seiten kante 34 angeordnet ist, wobei die Anschlüsse 11, 12 des Fluidkanals des Scheibenpakets 4 zu einer anderen Seitenkante 35 benachbart angeordnet sind, wobei das Fenster 31 und die Anschlüsse 11, 12 an jeweils gegenüberliegenden Seitenkanten 34, 35 der zweiten Scheibe beziehungsweise des ersten Scheibenpakets 4 angeordnet sind. Dies hat den Vorteil, dass die Fluidanschlüsse 11, 12 entfernt von den elektrischen Anschlüssen des elektrischen Heizelements angeordnet sind.

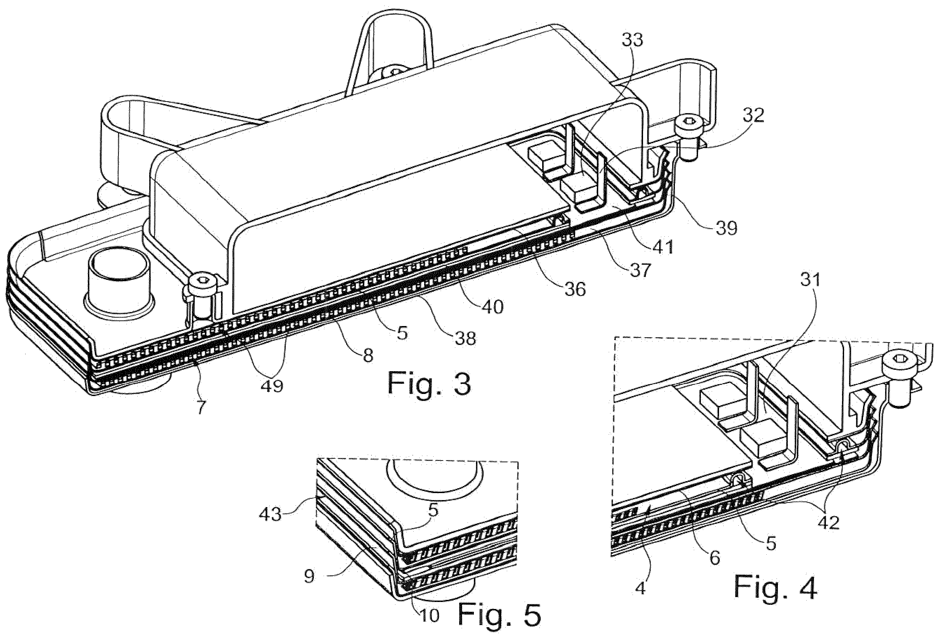

Die Figur 3 zeigt einen Schnitt durch die erfindungsgemäße Heizvorrichtung gemäß der Figuren 1 und 2, wobei zu erkennen ist, dass zwischen dem ersten Scheibenpaket 4 und dem zweiten Scheibenpaket 8 ein Kanal 36, 37 jeweils vorgesehen ist, der zur Durchströmung des Fluids dient. Die Scheiben des Scheibenpakets 8 sind als Stapelscheiben mit einem flachen ebenen Boden 38 und einem hochgestellten Rand 39 ausgebildet, wobei die ineinander gestapelten Scheiben sich am Rand berühren und dort dicht verlötet sind.

Zwischen der ersten Scheibe 5 des ersten Scheibenpakets 4 und der ersten Scheibe 9 des zweiten Scheibenpakets 8 ist das elektrische Heizelement 40 angeordnet. Das elektrische Heizelement 40 weist dabei bevorzugt einen Träger 41 auf, welcher ein elektrisches Widerstandselement trägt, wobei der Träger 41 bevorzugt auch die Anschlusseinrichtung 32 sowie gegebenenfalls leistungselektronische Bauteile 33 trägt.

Die Figur 4 zeigt noch einmal in einem Detail die Ausbildung des Fensters 31, wobei dazu die erste Scheibe 5 einen umlaufenden erhabenen Rand 42 aufweist, welcher gegen die zweite Scheibe 6 des ersten Scheibenpakets 4 anstößt und dicht verlötet ist, so dass der Fluidkanal 3 durch die verlötete Verbindung zwischen dem umlaufenden Vorsprung und der darüber liegenden Scheibe 6 abgedichtet ist.

Die Figur 5 zeigt noch einmal ein Detail der Figur 3. Dabei ist zu erkennen, dass ein Dichtelement 43 zwischen der ersten Scheibe 5 des ersten Scheibenpakets 4 und der ersten Scheibe 9 des zweiten Scheibenpakets 8 an der umlaufenden hochgestellten Wandung eingefügt ist, um den Raumbereich zur Aufnahme des elektrischen Heizelements nach außen hin abzudichten. Diese Dichtung kann beispielsweise ein umlaufendes Kunststoffteil oder Gummiteil sein, es kann auch mittels eines Klebers abgedichtet sein.

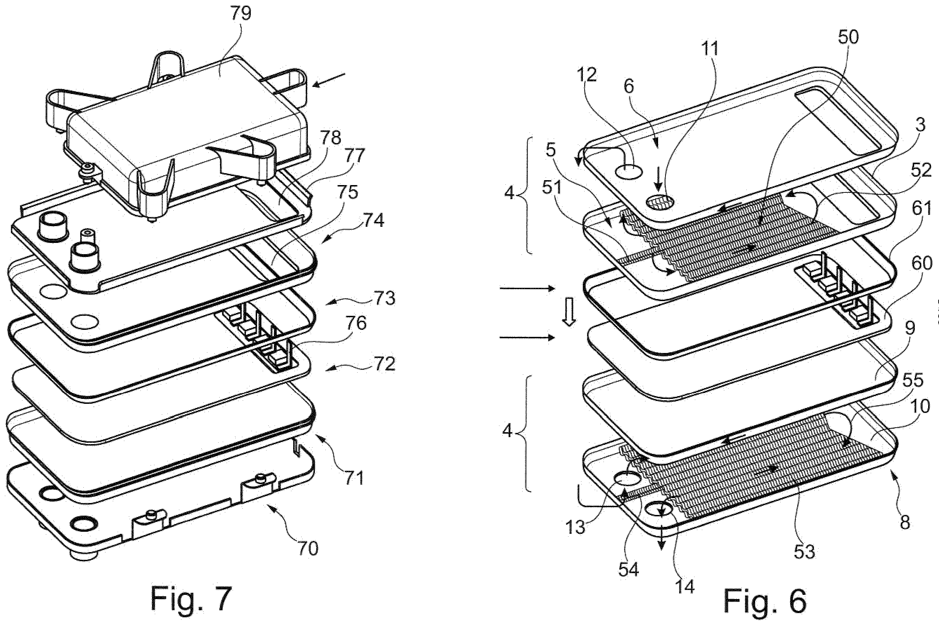

Die Figur 6 und die Figur 7 zeigen die Anordnung der Scheibenelemente und der Scheibenpakete zum Aufbau der erfindungsgemäßen Vorrichtung gemäß Figur 1. Zu erkennen ist in Figur 6 die erste Scheibe 5 des ersten Scheibenpakets 4 sowie die zweite Scheibe 6 des ersten Scheibenpakets 4, die unter Zwischenlage eine Turbulenzeinlage 50 aufeinander gestapelt werden. Dabei ist in der Scheibe 6 ein Strömungslenkelement 51 vorgesehen, so dass das durch den Einlass 11 eintretende Fluid längs der Scheibe 5 bzw. 6 strömt, am gegenüberliegenden Ende umgelenkt wird und wieder zum Auslass 12 zurückströmt und von dort aus dem Fluidkanal 3 austritt. Das zweite Scheibenpaket 8 ist gebildet durch die erste Scheibe 9 und die zweite Scheibe 10, die wiederum unter Zwischenlage der Turbulenzeinlage 53 miteinander verbunden werden, wobei auch die Scheibe 10 das Strömungslenkelement 54 aufweist, so dass das Fluid, das durch den Einlass 13 einströmt in Längsrichtung entlang der Scheibe 10 strömt, am gegenüberliegenden Ende gemäß Pfeil 55 umgelenkt wird und anschließend wieder zum Auslass 14 zurückströmt. Zwischen die Scheibe 5 und die Scheibe 9, also zwischen die erste Scheibe 5 des ersten Scheibenpakets 4 und der ersten Scheibe 9 des zweiten Scheibenpakets 8 wird die elektrische Heizvorrichtung 60 eingeführt, wobei das elektrische Heizelement 60 gegenüber den Scheiben 5, 89 elektrisch isoliert ist und es ist ein Isolationsund Dichtmittel 61 eingelegt, um das elektrische Heizelement 60 auch gegenüber dem Rand der Scheiben abzudichten.

In Figur 7 ist zu erkennen, dass von unten nach oben betrachtet eine Verstärkungsscheibe 70 angeordnet ist. Darüber wird ein zweites Scheibenpaket 71 angeordnet. Darüber wird das elektrische Heizelement 72 mit dem Isolations- und Dichtmittel 73 angeordnet. Darüber wird das erste Scheibenpaket 74 mit dem Fenster 75 angeordnet, so dass die Anschlusseinrichtung 76 des elektrischen Heizelements 72 durch das Fenster 75 ragen kann. Darüber wird eine Verstärkungsscheibe 77 mit dem Fenster 78 angeordnet, so dass wiederum die Anschlusseinrichtung 76 durch das Fenster 78 ragen kann, wobei auf die oberste Verstärkungsscheibe 77 die elektrische Steuereinrichtung 79 aufgesetzt wird, um die Anschlusseinrichtung des elektrischen Heizelements 72 zu kontaktieren.

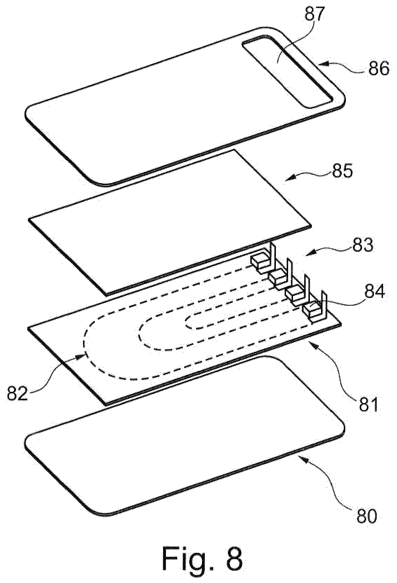

Die Figur 8 zeigt eine untere Ausgleichsplatte 80, auf welche der Träger 81 der elektrischen Heizvorrichtung aufgelegt wird, welcher die elektrische Widerstandsschicht 82 trägt. Weiterhin trägt der Träger 81 die Anschlusseinrichtung 83 und gegebenenfalls elektronische Bauelemente 84, wie Leistungshalbleiter. Darüber ist ein Isolationselement 85, wie beispielsweise eine Isolationskeramik, angeordnet, die beispielsweise das gleiche Material aufweist wie der Träger 81. Dies dient der elektrischen Isolierung der Widerstandsschicht. Darüber kann wiederum eine Ausgleichsplatte 86 angeordnet werden, wobei die Ausgleichsplatte 86 ein Fenster 87 aufweist zum Durchgreifen der Anschlusseinrichtung 83 des elektrischen Heizelements. Die Ausgleichsplatte dient dabei einer besseren thermischen Ankopplung und erlaubt einen mechanischen Ausgleich zwischen dem elektrischen Heizelement und der darüber liegenden bzw. darunter liegenden Scheibe.

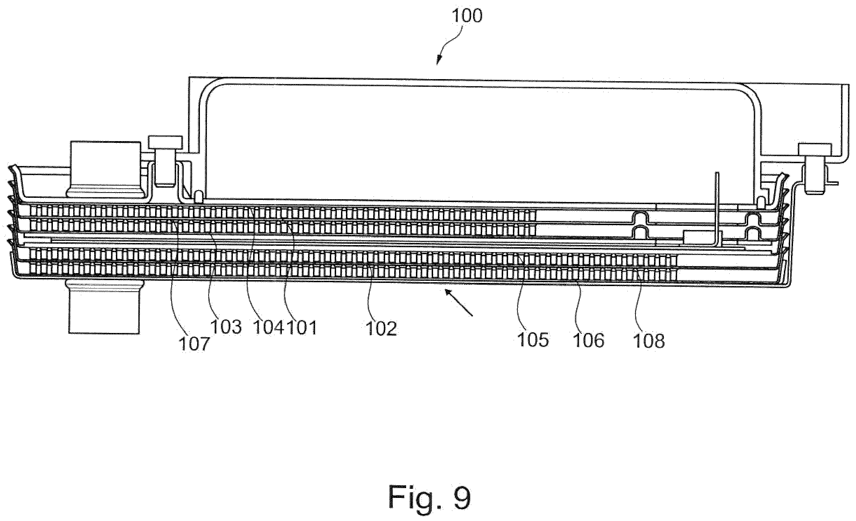

Die Figur 9 zeigt ein weiteres Ausführungsbeispiel 100 der erfindungsgemäßen Heizvorrichtung, bei welcher die ersten und zweiten Scheibenpakete 101, 102 mehrflutig ausgebildet sind, wobei die Scheibenpakete 101, 102 eine erste Scheibe 103 und eine zweite Scheibe 104 beziehungsweise eine erste Scheibe 105 und eine zweite Scheibe 106 aufweisen, wobei zwischen diesen Scheiben 103, 104 bzw. 105, 106 eine Zwischenscheibe 107 beziehungsweise 108 angeordnet ist, um eine Mehrflutigkeit des Strömungskanals zu bewirken. Auch können alternativ mehrere Zwischenscheiben vorgesehen sein.

Die erfindungsgemäße Heizvorrichtung kann auch mit nur einem Fluidkanal ausgebildet sein, so dass nur der erste Fluidkanal mit dem elektrischen Heizelement verbunden ist. Der zweite Fluidkanal kann in Abhängigkeit des Heizbedarfs auch entfallen.

Die Anordnung des elektrischen Heizelements zwischen zwei Scheiben ist besonders bevorzugt, weil dadurch das elektrische Heizelement durch Isolationsmaterialien von der Umgebung elektrisch isoliert werden kann, wobei der Raumbereich zur Aufnahme des elektrischen Heizelements gleichzeitig abgedichtet werden kann. Das elektrische Heizelement kann dabei mit einem Träger und einer darauf aufgebrachten Widerstandsschicht ausgebildet sein, wobei die Widerstandsschicht durch ein Abdeckelement abgedeckt und somit elektrisch isoliert werden kann. Bevorzugt ist die Ausbildung des Trägers und des Abdeckelements aus Keramik, weil diese Lösung bei gleichzeitig guter elektrischer Isolierung eine gute thermische Leitfähigkeit zeigt, so dass das elektrische Heizelement zwar elektrisch isoliert aber dennoch thermisch gut an die angrenzenden Scheiben angekoppelt ist.

Die elektrische Widerstandsschicht kann dabei eine einzige elektrische Widerstandsschicht sein, die mittels eines Leistungsschalters geschaltet werden kann. Es kann aber auch eine Mehrzahl von elektrischen Widerstandsschichten vorgesehen sein, die elektrisch parallel oder seriell betrieben werden können. Diese können dann jeweils durch eigene elektrische Leistungshalbleiterschalter gesteuert werden, so dass auch eine Modulation der elektrischen Heizleistung vorgenommen werden kann. Diese Schichten können dann nebeneinander auf dem Träger vorgesehen sein. Alternativ können die Schichten auch elektrisch isoliert übereinander angeordnet sein.

Der Aufbau der Scheibenpakete beziehungsweise des Stapels der Scheiben wird bevorzugt durch so genannte Stapelscheiben gebildet, die aufeinander gestapelt werden, und die einen ebenen Grundkörper und einen hochgestellten Rand aufweisen. Durch die Verwendung von Stapelscheiben, die aufeinander gesetzt und miteinander verlötet werden, kann sichergestellt werden, dass die dazwischen angeordneten Fluidkanäle abgedichtet ausgebildet sind. Eine Anordnung des elektrischen Heizelements zwischen zwei Stapelscheiben, die miteinander verbunden und abgedichtet werden, ist bevorzugt, da das elektrische Heizelement nicht in Kontakt tritt mit einem Fluidkanal, der dann jedoch auf einer gegenüberliegenden Seite einer Scheibe angeordnet ist. Es hat sich gezeigt, dass für den Fall, dass der Randbereich eines Fluidkanals nicht dicht gelötet ist, das Fluid an dem Randbereich des Scheibenpakets austreten kann wo die Lötnaht ist, wobei das Fluid dann nach außen austritt und nicht in Richtung auf die elektrische Heizeinrichtung strömt. Damit wäre sichergestellt, dass die elektrische Heizeinrichtung bei einer Undichtigkeit eines Scheibenpakets nicht von dem Fluid kurzgeschlossen wird.

Hinsichtlich der Herstellungsmethode kann es vorteilhaft sein, wenn die Scheibenpakete als vormontierte Einheit ausgebildet sind, die miteinander verlötet einen Fluidkanal aufweisen. Die Anschlüsse sind durch Öffnungen in den Scheiben und beispielsweise mit angelöteten Stutzen ausgebildet. Zwischen zwei Scheiben kann bevorzugt eine Einlage, beispielsweise als turbulenzerzeugende Turbulenzeinlage, ausgebildet sein.

Die Kontaktierung zwischen der elektrischen Heizeinrichtung und einer Scheibe ist begünstig, wenn die Scheibe möglichst eben ausgebildet ist. Dies ist wiederum begünstig, wenn eine Turbulenzeinlage in einem Fluidkanal angeordnet ist, weil dann eine sehr stabile ebene Konstruktion geschaffen wird. Dennoch kann es zweckmäßig sein, wenn zwischen die Heizeinrichtung und eine benachbarte Scheibe eine Wärmeleitpaste angeordnet ist, um einen günstigen Wärmübergang zu gewährleisten.

Alternativ können die Scheiben auch Einprägungen nach Art von Dimpeln oder Winglets aufweisen, die nach innen in Richtung auf den Fluidkanal vorragen. Dies kann den Einsatz einer Turbulenzeinlage ersetzen.

## Patentansprüche

1. Heizvorrichtung (1) mit aufeinander gestapelten Scheiben (2), wobei zumindest ein erster Fluidkanal (3) zwischen einem ersten Scheibenpaket (4) mit einer ersten (5) und einer zweiten (6) Scheibe fluiddicht ausgebildet ist und wobei ein elektrisches Heizelement (40, 60) zwischen einer ersten Scheibe des ersten Scheibenpakets (4) und einer weiteren Scheibe (9) angeordnet ist, wobei das elektrische Heizelement zwischen den beiden Scheiben abgedichtet aufgenommen und elektrisch isoliert ist, wobei ein einlassseitiger und ein auslassseitiger Fluidanschluss (11), (12) des ersten Fluidkanals an der zweiten Scheibe (6) des ersten Scheibenpakets angeordnet ist, wobei das elektrische Heizelement eine Anschlusseinrichtung (32) zur elektrischen Kontaktierung aufweist, welche mit dem elektrischen Heizelement verbunden ist und durch ein Fenster (31) in dem ersten Scheibenpaket (4) ragt, **dadurch gekennzeichnet, dass** die Fluidanschlüsse (11, 12) benachbart zu einer Seitenkante (35) von gegenüberliegenden Seitenkanten (34, 35) der zweiten Scheibe angeordnet sind und das Fenster benachbart zu der anderen Seitenkante (34) der gegenüberliegenden Seitenkanten der zweiten Scheibe (6) angeordnet ist.

2. Heizvorrichtung nach Anspruch 1, **dadurch gekennzeichnet, dass** zumindest ein zweiter Fluidkanal (7) zwischen einem zweiten Scheibenpaket mit einer ersten (9) und einer zweiten Scheibe (10) fluiddicht ausgebildet ist.

3. Heizvorrichtung nach Anspruch 2, **dadurch gekennzeichnet, dass** das elektrische Heizelement (40) zwischen der ersten Scheibe (5) des ersten Scheibenpakets und der ersten Scheibe (9) des zweiten Scheibenpakets abgedichtet aufgenommen und elektrisch isoliert ist.

4. Heizvorrichtung nach zumindest einem der vorhergehenden Ansprüche, **dadurch gekennzeichnet, dass** ein einlassseitiger und ein auslassseitiger Fluidanschluss (14, 15) des zweiten Fluidkanals an der zweiten Scheibe des zweiten Scheibenpakets angeordnet ist.

5. Heizvorrichtung nach zumindest einem der vorhergehenden Ansprüche, **dadurch gekennzeichnet, dass** der erste und/oder der zweite Fluidkanal zweiflutig oder mehrflutig ausgebildet ist unter Zwischenanordnung zumindest einer dritten Scheibe (107, 108) oder mehrerer Scheiben zwischen der ersten und der zweiten Scheibe.

6. Heizvorrichtung nach zumindest einem der vorhergehenden Ansprüche, **dadurch gekennzeichnet, dass** die zweite Scheibe des ersten und/oder des zweiten Fluidkanals mit einer Verstärkungsscheibe (70, 77) belegt ist.

7. Heizvorrichtung nach zumindest einem der vorhergehenden Ansprüche, **dadurch gekennzeichnet, dass** der auslassseitige Fluidanschluss (12) des ersten Fluidkanals mit dem einlassseitigen Fluidanschluss (13) des zweiten Fluidkanals fluidverbunden ist.

8. Heizvorrichtung nach zumindest einem der vorhergehenden Ansprüche, **dadurch gekennzeichnet, dass** das elektrische Heizelement (40, 60) als elektrisches Widerstandselement auf einem Träger (41, 81) aufgenommen ist.

9. Heizvorrichtung nach zumindest einem der vorhergehenden Ansprüche, **dadurch gekennzeichnet, dass** das elektrische Widerstandselement durch eine Deckschicht abgedeckt und elektrisch isoliert ist.

10. Heizvorrichtung nach zumindest einem der vorhergehenden Ansprüche, **dadurch gekennzeichnet, dass** auf dem Träger weiterhin zumindest ein elektronisches Bauelement, wie ein Leistungselektronikbauelement (33, 84), angeordnet ist.

11. Heizvorrichtung nach zumindest einem der vorhergehenden Ansprüche, **dadurch gekennzeichnet, dass** eine Steuereinheit (18, 79) vorgesehen ist, die auf dem ersten Scheibenpaket oder auf der auf dem ersten Scheibenpaket aufgelegten Verstärkungsscheibe angeordnet ist und die mit der Anschlusseinrichtung des elektrischen Heizelements elektrisch verbunden ist.

12. Heizvorrichtung nach zumindest einem der vorhergehenden Ansprüche, **dadurch gekennzeichnet, dass** zwischen einer Scheibe und dem elektrischen Heizelement ein elektrisches Isolationselement (85) angeordnet ist.

13. Heizvorrichtung nach Anspruch 12, **dadurch gekennzeichnet, dass** zwischen einem Boden der Scheibe und dem elektrischen Heizelement ein flächiges Isolationselement (85) angeordnet ist und/oder zwischen einem hoch stehenden Rand der Scheibe und dem elektrischen Heizelement ein rahmenartiges Isolationselement (61) angeordnet ist.

14. Heizvorrichtung nach Anspruch 13, **dadurch gekennzeichnet, dass** zwischen dem Boden der Scheibe und dem flächigen Isolationselement eine Ausgleichsplatte (86) vorgesehen ist.

## Claims

1. A heating device (1) with plates (2) stacked one on top of another, wherein at least one first fluid channel (3) is formed in a fluid-tight manner between a first plate package (4) with a first (5) and a second (6) plate, and wherein an electrical heating element (40, 60) is arranged between a first plate of the first plate package (4) and an additional plate (9), wherein the electrical heating element is accommodated between the two plates in a sealed manner and is electrically insulated, wherein an inlet-side and an outlet-side fluid connection (11), (12) of the first fluid channel is arranged on the second plate (6) of the first plate package, wherein the electrical heating element has a connection device (32) for electrical contacting which is connected to the electrical heating element and protrudes through a window (31) in the first plate package (4), **characterised in that** the fluid connections (11, 12) are arranged adjacent to a lateral edge (35) of opposing lateral edges (34, 35) of the second plate and the window is arranged adjacent to the other lateral edge (34) of the opposing lateral edges of the second plate (6).

2. The heating device according to claim 1, **characterised in that** at least one second fluid channel (7) is formed between a second plate package with a first (9) and a second plate (10) in a fluid-tight manner.

3. The heating device according to claim 2, **characterised in that** the electrical heating element (40) is accommodated in a sealed manner between the first plate (5) of the first plate package and the first plate (9) of the second plate package and is electrically insulated.

4. The heating device according to at least one of the preceding claims, **characterised in that** an inlet-side and an outlet-side fluid connection (14, 15) of the second fluid channel is arranged on the second plate of the second plate package.

5. The heating device according to at least one of the preceding claims, **characterised in that** the first and/or the second fluid channel are formed as dual-flow or multi-flow with the intermediate arrangement of at least one third plate (107, 108) or a plurality of plates between the first and the second plate.

6. The heating device according to at least one of the preceding claims, **characterised in that** the second plate of the first and/or the second fluid channel are provided with a reinforcing plate (70, 77).

7. The heating device according to at least one of the preceding claims, **characterised in that** the outlet-side fluid connection (12) of the first fluid channel is fluidically connected to the inlet-side fluid connection (13) of the second fluid channel.

8. The heating device according to at least one of the preceding claims, **characterised in that** the electrical heating element (40, 60) is accommodated as an electrical resistive element on a support (41, 81).

9. The heating device according to at least one of the preceding claims, **characterised in that** the electrical resistive element is covered by a cover layer and is electrically insulated.

10. The heating device according to at least one of the preceding claims, **characterised in that** furthermore at least one electronic component, such as a power electronics component (33, 84), is arranged on the support.

11. The heating device according to at least one of the preceding claims, **characterised in that** a control unit (18, 79) is provided which is arranged on the first plate package or on the reinforcing plate placed on the first plate package and which is electrically connected to the connection device of the electrical heating element.

12. The heating device according to at least one of the preceding claims, **characterised in that** an electrical insulation element (85) is arranged between a plate and the electrical heating element.

13. The heating device according to claim 12, **characterised in that** a flat insulation element (85) is arranged between a bottom of the plate and the electrical heating element and/or a frame-like insulation element (61) is arranged between an upright edge of the plate and the electrical heating element.

14. The heating device according to claim 13, **characterised in that** a compensating plate (86) is provided between the bottom of the plate and the flat insulation element.

## Revendications

1. Dispositif de chauffage (1) comprenant des plaques (2) empilées les unes sur les autres, où au moins un premier conduit de fluide (3) est configuré, en étant étanche au fluide, entre un premier paquet de plaques (4) comportant une première plaque (5) et une deuxième plaque (6), et où un élément chauffant électrique (40, 60) est disposé entre une première plaque du premier paquet de plaques (4) et une autre plaque (9), où l'élément chauffant électrique est logé, en étant rendu étanche, entre les deux plaques, et isolé électriquement, où un raccordement de fluide (11, 12), côté entrée et côté sortie, du premier conduit de fluide est disposé sur la deuxième plaque (6) du premier paquet de plaques, où l'élément chauffant électrique présente un dispositif de connexion (32) servant à la mise en contact électrique, lequel dispositif de connexion est relié à l'élément chauffant électrique et fait saillie à travers une fenêtre (31) placée dans le premier paquet de plaques (4), **caractérisé en ce que** les raccordements de fluide (11, 12) sont disposés à proximité d'une arête latérale (35) d'arêtes latérales (34, 35) - placées à l'opposé l'une de l'autre - de la deuxième plaque, et la fenêtre est disposée à proximité de l'autre arête latérale (34) des arêtes latérales - placées à l'opposé l'une de l'autre - de la deuxième plaque (6).

2. Dispositif de chauffage selon la revendication 1, **caractérisé en ce qu'**au moins un deuxième conduit de fluide (7) est configuré, en étant étanche au fluide, entre un deuxième paquet de plaques comportant une première plaque (9) et une deuxième plaque (10).

3. Dispositif de chauffage selon la revendication 2, **caractérisé en ce que** l'élément chauffant électrique (40) est logé, en étant rendu étanche, entre la première plaque (5) du premier paquet de plaques et la première plaque (9) du deuxième paquet de plaques, et isolé électriquement.

4. Dispositif de chauffage selon au moins l'une quelconque des revendications précédentes, **caractérisé en ce qu'**un raccordement de fluide (14, 15), côté entrée et côté sortie, du deuxième conduit de fluide est disposé sur la deuxième plaque du deuxième paquet de plaques.

5. Dispositif de chauffage selon au moins l'une quelconque des revendications précédentes, **caractérisé en ce que** le premier conduit de fluide et / ou le deuxième conduit de fluide est configuré en formant deux flux ou des flux multiples, sous l'effet d'un agencement intermédiaire d'au moins une troisième plaque (107, 108) ou de plusieurs plaques disposées entre la première plaque et la deuxième plaque.

6. Dispositif de chauffage selon au moins l'une quelconque des revendications précédentes, **caractérisé en ce que** la deuxième plaque du premier et / ou du deuxième conduit de fluide est dotée d'une plaque de renfort (70, 77).

7. Dispositif de chauffage selon au moins l'une quelconque des revendications précédentes, **caractérisé en ce que** le raccordement de fluide (12), côté sortie, du premier conduit de fluide est fluidiquement relié au raccordement de fluide (13), côté entrée, du deuxième conduit de fluide.

8. Dispositif de chauffage selon au moins l'une quelconque des revendications précédentes, **caractérisé en ce que** l'élément chauffant électrique (40, 60) conçu comme un élément à résistance électrique est logé sur un support (41, 81).

9. Dispositif de chauffage selon au moins l'une quelconque des revendications précédentes, **caractérisé en ce que** l'élément à résistance électrique est recouvert par une couche de protection et isolé électriquement.

10. Dispositif de chauffage selon au moins l'une quelconque des revendications précédentes, **caractérisé en ce qu'**au moins un composant électronique tel qu'un composant électronique de puissance (33, 84) est disposé en outre sur le support.

11. Dispositif de chauffage selon au moins l'une quelconque des revendications précédentes, **caractérisé en ce qu'**il est prévu une unité de commande (18, 79) qui est disposée sur le premier paquet de plaques ou sur la plaque de renfort placée sur le premier paquet de plaques et qui est reliée électriquement au dispositif de connexion de l'élément chauffant électrique.

12. Dispositif de chauffage selon au moins l'une quelconque des revendications précédentes, **caractérisé en ce qu'**un élément d'isolation électrique (85) est disposé entre une plaque et l'élément chauffant électrique.

13. Dispositif de chauffage selon la revendication 12, **caractérisé en ce qu'**un élément d'isolation (85) à surface plate est disposé entre un fond de la plaque et l'élément chauffant électrique et / ou un élément d'isolation (61) en forme de cadre est disposé entre un bord de la plaque, dirigé vers le haut, et l'élément chauffant électrique.

14. Dispositif de chauffage selon la revendication 13, **caractérisé en ce qu'**il est prévu une plaque de compensation (86) disposée entre le fond de la plaque et l'élément d'isolation à surface plate.
